# EUROPEAN PATENT APPLICATION

(11) **EP 2 737 874 A1**
(43) Date of publication of application: **04.06.2014**
(21) Application number: 13194918.2
(22) Date of filing: 28.11.2013
(51) Int. Cl.: A61C 17/028

(54) **Dental hygiene device**

(30) Priority: 30.11.2012 HK 12112384
(71) Applicant: Techtronic Floor Care Technology Limited, Tortola (VG)
(72) Inventor: Chan, Wai Tong, Tsing Yi (HK); Mok, Kwok Ting, Kowloon (HK)
(74) Representative: Stevenson-Hill, Jack Patrick

(57) **Abstract**

A dental hygiene device including a reservoir for storing fluid. The reservoir includes an inlet and an outlet. The dental hygiene device includes a pump having a piston driven by a motor. The pump is in fluid communication with the reservoir. The piston has a forward stroke and a backward stroke for providing a pulsating fluid flow through the outlet of the reservoir. The dental hygiene device includes a transmission connecting the pump and the motor; and means to provide intermittent pauses in the pulsating fluid flow.

## Description

### Field of Invention

The present invention relates to a dental hygiene device.

### Background

A dental hygiene device, also known as a water jet or water pick, is commonly used in conjunction with a toothbrush to promote good dental hygiene. A typical water jet includes a reservoir for storing fluid such as water or mouthwash. The reservoir is typically at least large enough to hold a sufficient supply of water for a complete mouth wash. The reservoir is generally about 120 ml. A pump driven by a motor produces a continuous pulsating water stream, which is directed through a nozzle and into the mouth for cleaning teeth and gums. The continuous pulsating water results in a high water consumption rate. It is desirable to minimize the water consumption rate while still maintaining effective cleaning.

### Summary of Invention

The present invention provides a dental hygiene device for promoting clean teeth and gums. The dental hygiene device includes a reservoir for storing fluid. The reservoir includes an inlet and an outlet. The dental hygiene device includes a pump having a piston driven by a motor. The pump is connected to the inlet of the reservoir. The piston has a forward stroke and a backward stroke for providing a pulsating fluid flow through the outlet of the reservoir. A transmission is coupled between the pump and the motor. The dental hygiene device includes means to provide intermittent pauses in the pulsating fluid flow.

In one embodiment the forward stroke and the backward stroke of the piston are non symmetrical.

Preferably, the transmission includes an elliptical gear set.

Alternatively, the transmission includes a non-circular cam. For example, the transmission may include an oval cam or a triangular cam.

In another embodiment the dental hygiene device may include a printed circuit board assembly configured to selectively energise and de-energise the motor.

### Brief Description of Drawings

Preferred embodiments of the present invention will now be described, by way of example only, with reference to the accompanying drawings wherein:
Figure 1 illustrates a dental hygiene device according to one embodiment of the present invention;
Figures 2a-2e illustrate a partial view of the dental hygiene device of Figure 1;
Figure 3 illustrates a fluid stream cycle of the dental hygiene device of Figure 1;
Figures 4a-4e illustrate a partial view of a dental hygiene device according to another embodiment of the present invention;
Figure 5 illustrates a fluid stream cycle of the dental hygiene device of Figures 4a-4e;
Figures 6a-6e illustrate a partial view of a dental hygiene device according to another embodiment of the present invention;
Figure 7 illustrates a fluid stream cycle of the dental hygiene device of Figures 6a-6e;
Figure 8 illustrates a dental hygiene device according to another embodiment of the present invention;
Figure 9 illustrates a pulsating fluid pattern of a common dental hygienic device; and
Figures 10 - 14 illustrate various patterns of a pulsating fluid stream with intermittent pauses in accordance with the present invention.

### Detailed Description of Preferred Embodiments

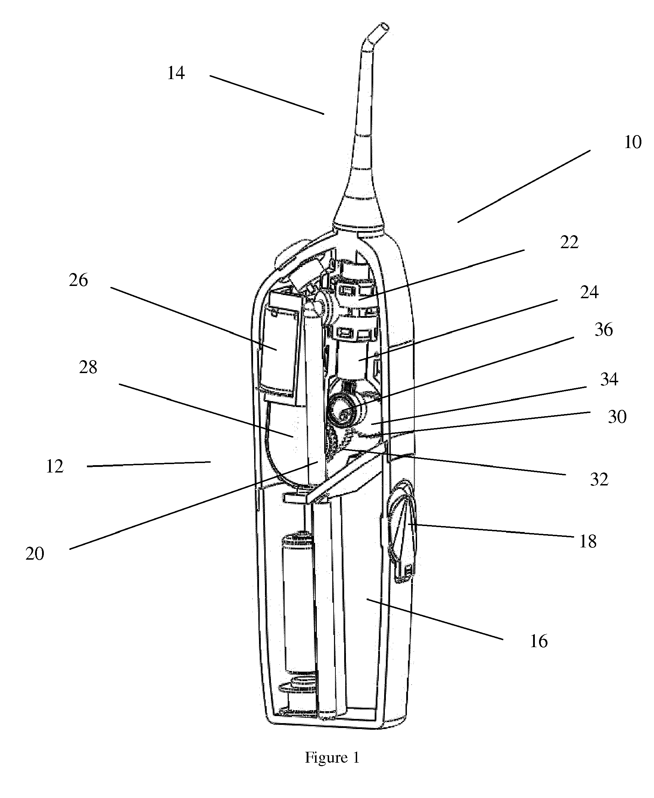

There is disclosed herein a dental hygiene device for promoting dental hygiene. Referring to Figure 1, the dental hygiene device 10 includes a handle 12 and a nozzle 14 extending from the handle 12. A reservoir 16 for storing dental cleaning fluid such as water, mouthwash or the like is housed within the handle 12. The reservoir includes an inlet 18 and an outlet 20. A pump 22 is in fluid communication with the reservoir 16. The pump 22 includes a piston 24 driven by a motor 26 to provide a forward stroke and a backward stroke to produce a pulsating fluid stream through the nozzle 14. The nozzle 14 is configured to direct the fluid within the mouth to clean teeth and gums. A transmission 28 connects the pump 22 and the motor 26. The dental hygiene device 10 includes an elliptical gear set 30 to provide intermittent pauses in the pulsating fluid flow. The intermittent pauses provide a longer irrigating time with the same amount of water. This is advantageous in that the efficiency of water usage is increased, and the size of the reservoir may be up to 50 percent smaller thus allowing for a slimmer, more ergonomic device.

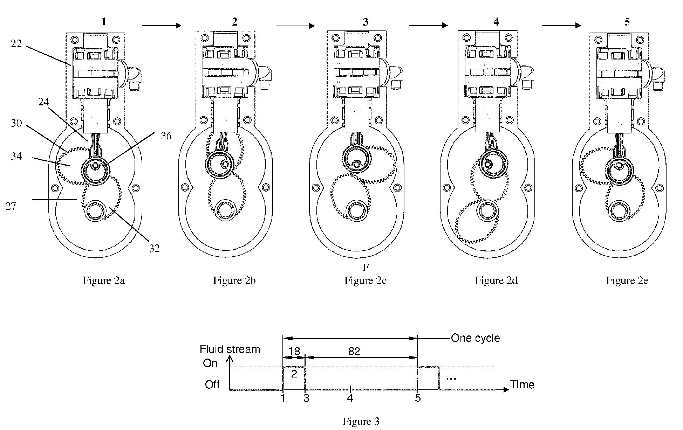

Referring to Figures 2a-2e the gear set 30 includes an elliptical drive gear 32 connected to the motor 26 to drive an elliptical driven gear 34 carrying a cam 36. The driven gear 34 is meshed with the drive gear 32 and connected to the piston 24. Because the gears 32, 34 are non circular, the forward stroke and the backward stroke are non-symmetric. Preferably, the ratio of forward stroke to backward stroke is 18:82, however other ratios may be suitable. The elliptical drive gear 32 rotates at a constant angular speed while the elliptical driven gear 34 changes speed during each rotation.

Figures 2a-2e and 3 show the fluid stream during one elliptical gear cycle. Preferably, the elliptical drive gear 32 rotates at a constant angular speed of about 600 rpm. It will be understood that speeds from 200 to 2,000 rpms may also be suitable. Rotation of the elliptical drive gear 32 causes the elliptical driven gear 34, carrying the cam 36 to rotate. The cam 36 converts the rotational movement of the motor 26 into linear displacement of the piston 24. When the piston 24 is in its most backward position as shown in Figure 2a, the fluid stream is off as shown in Figure 3. As the elliptical gear set 30 rotates, the piston 24 moves forward urging the fluid through the nozzle 14, as shown in Figure 2b, until the piston 24 is at its most forward position, as shown in Figure 2c. As the elliptical drive gear 32 continues to rotate, the piston 24 moves to mid point of the backward stroke as shown in Figure 2d and the pause in the pulsating fluid stream continues until the piston 24 returns to most backward position of the forward stroke. From its most backward position (2a) to its most forward position (2c) the elliptical drive gear 32 rotates 64 degrees and the elliptical driven gear rotates 180 degrees. Once the piston 24 is at its most forward position the fluid stream is off until the piston 24 is back to most backward position of forward stroke. Since the gears 32, 34 are non circular the forward stroke and the backward stroke are non symmetrical. In this case, the forward stroke is 18 percent of one cycle and the backward stroke is 82 percent of one cycle, thus fluid is only exiting the nozzle 18 percent of the cycle compared to 50 percent of the cycle if the forward stroke and backward stroke were uniform.

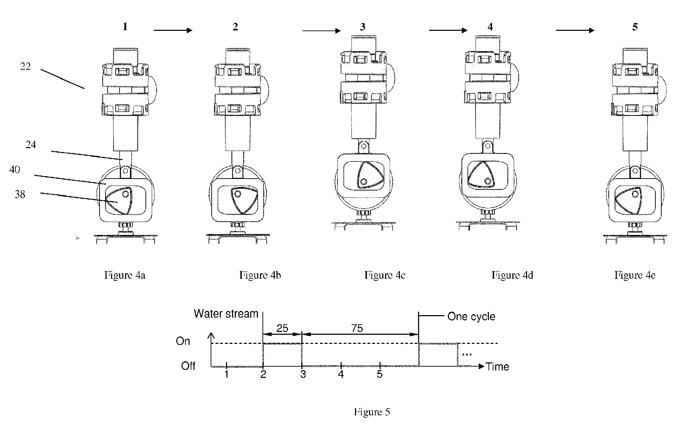

In another embodiment shown in Figures 4a-4e and 5 the transmission 28 includes a triangular cam 38 and cam follower 40. The triangular cam 38 rotates at a constant speed within the cam follower 40 (4b). The movement of the cam follower 40 is transmitted to linear movement of the piston 24 providing a ratio of forward stroke to backward stroke of 25:75. When the triangular cam 38 is turned 90 degrees the triangular cam 38 engages the cam follower 40 (4b) which, in turn, moves the piston 24 forward thus urging the fluid stream through the nozzle 14. The fluid stream is urged through the nozzle 14 until the triangular cam 38 rotates a further 90 degrees and disengages from the cam follower 40 (4c). The fluid stream is stopped. The triangular cam 38 rotates a further 90 degrees and engages the cam follower 40 again. The cam follower 40 starts to move backward (4d). There is still no fluid stream through the nozzle 14. The triangular cam 38 rotates another 90 degrees to the most backward position (4e), the triangular cam 38 disengages from the cam follower 40 to finish the cycle. In this embodiment, fluid is exiting the nozzle 14, about 25 percent of the cycle.

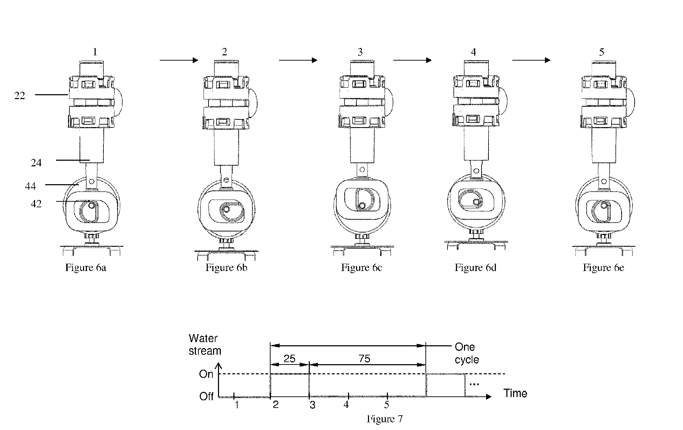

In a further embodiment shown in Figures 6a-6e and 7 the transmission 28 includes an oval cam 42 and cam follower 44. Similar to the triangular cam arrangement described above, the oval cam 42 rotates at a constant speed within the cam follower 44. The movement of the cam follower 44 is transmitted to linear movement of the piston 24 providing a forward stroke to backward stroke ratio of 25:75. Referring to Figures 6a-6e and 7 when the oval cam 42 is turned 90 degrees the oval cam 42 engages the cam follower 44 (6b) which in turn moves the piston 24 forward thus urging the fluid stream through the nozzle 14. The fluid stream is urged through the nozzle 14 until the oval cam 42 disengages from the cam follower 42 (6c). Once the oval cam 42 disengages from the cam follower 44 (6c) the fluid stream is stopped. The oval cam 42 continues to rotate engaging with the cam follower 44 again, and the cam follower 44 starts to move backward (6d). The oval cam 42 continues to rotate completing the cycle when the cam follower 44 is in the most backward position (6e). In this embodiment, fluid is exiting the nozzle 14, 25 percent of the cycle.

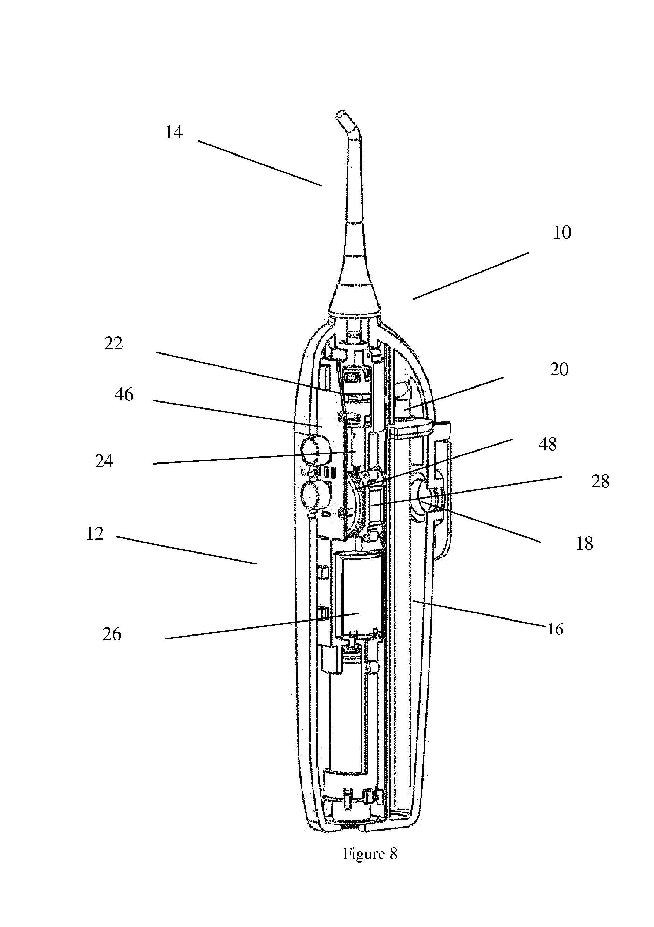

In a further embodiment as shown in Figure 8, the dental hygiene device 10 may include a printed circuit board (PCB) 46 housed within the handle 12 and configured to selectively energise and de-energise the motor 26 in accordance with a preset program. The PCB 46 may also be used to vary the fluid pressure through the nozzle 14 by varying the pump speed if required. In this embodiment the transmission 28 may be a circular gear set 28 and provide a symmetrical forward and backward piston stroke. Intermittent pauses are generated in the pulsating fluid flow by energising and de-energising the motor.

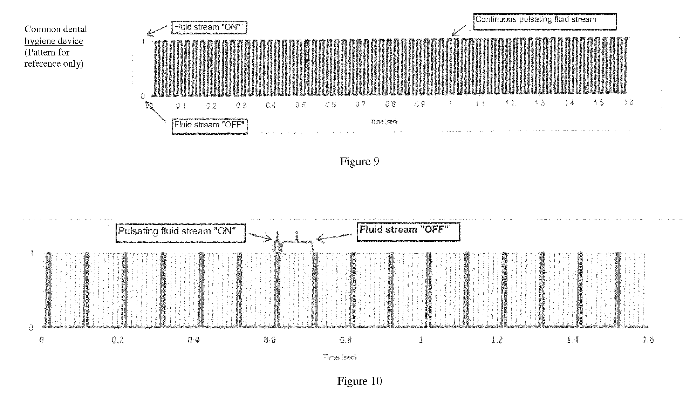

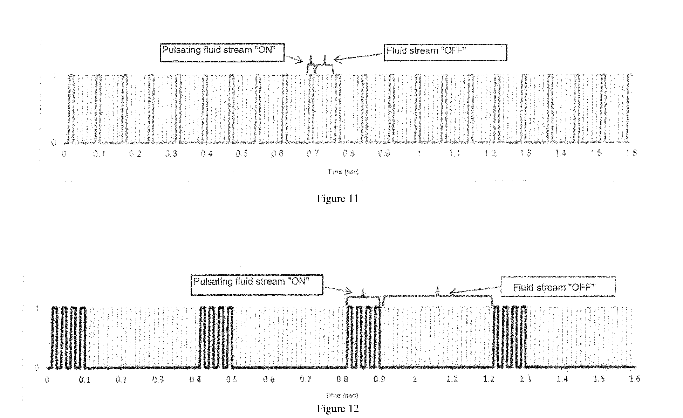

For reference, Figure 9 shows a pulsating fluid stream pattern of a typical dental hygiene device. Figures 10 to 14 show various patterns of a pulsating fluid stream according to the present invention. Figures 10 and 11 show a pulsating fluid stream provided by a non circular transmission. The fluid usage is less compared to that of the common dental hygiene device thus allowing for a smaller reservoir, and more efficient fluid usage.

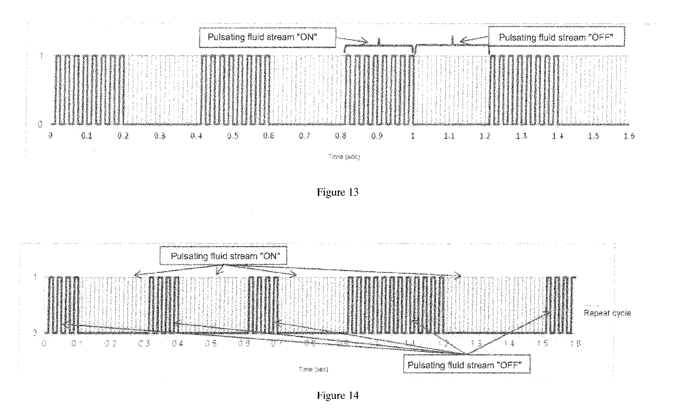

As shown in Figures 12, 13 and 14, pauses may be superimposed onto a pulsating fluid stream using the PCB as described above. In Figure 12, the preset program provides a pause of 0.3 seconds between each 0.1 second burst of fluid stream. Alternatively, as shown in Figure 13, the preset program may include a 'turbo' mode which provides a 0.2 second pause between each 0.2 second burst of fluid. It may also be desirable to provide a massage mode as shown in Figure 14.

Although the invention has been described with reference to specific examples, persons skilled in the art will appreciate that the invention can be embodied in many other forms.

## Claims

1. A dental hygiene device including:
a reservoir for storing fluid, the reservoir having an inlet and an outlet;
a pump having a piston driven by a motor, the pump in fluid communication with the reservoir, the piston having a forward stroke and a backward stroke for providing a pulsating fluid flow through the outlet of the reservoir;
a transmission coupled between the pump and the motor; and
means to provide intermittent pauses in the pulsating fluid flow.

2. The dental hygiene device of claim 1, wherein the forward stroke and the backward stroke of the piston are non symmetrical.

3. The dental hygiene device of claim 2, wherein the transmission includes an elliptical gear set.

4. The dental hygiene device of claim 2, wherein the transmission includes a non-circular cam.

5. The dental hygiene device of claim 4, wherein the transmission includes an oval cam.

6. The dental hygiene device of claim 4, wherein the transmission includes a triangular cam.

7. The dental hygiene device of claim 1, further including a printed circuit board assembly configured to selectively energise and de-energise the motor.
